# EUROPEAN PATENT SPECIFICATION

(11) **EP 0 658 954 B1**
(45) Date of publication and mention of the grant of the patent: **15.07.1998**
(21) Application number: 94119850.9
(22) Date of filing: 15.12.1994
(51) Int. Cl.: H01R 13/629, H01R 13/639

(54) **Lever connector with engagement mechanism for holding a locking lever at a lock position**
Steckverbinder mit Hebel und Kupplungsmechanismus zur Haltung des Verriegelungshebels in der verriegelten Stellung
Connecteur à levier à mécanisme d'engagement pour garder le levier de verrouillage dans sa position de verrouillage

(30) Priority: 17.12.1993 JP 344458/93; 29.03.1994 JP 84051/94; 07.04.1994 JP 95804/94
(43) Date of publication of application: 21.06.1995
(73) Proprietor: SUMITOMO WIRING SYSTEMS, Ltd., Yokkaichi-shi, Mie-ken 510 (JP)
(72) Inventor: Katsuma, Takatoshi, c/o Sumitomo Wiring Sys., LTD., Yokkaichi-shi, Mie-ken (JP)
(74) Representative: KUHNEN, WACKER & PARTNER

(56) References cited:
- JP-A- 5 090 843
- JP-U- 5 090 845

## Description

This invention relates to a lever connector having a locking lever for locking a counterpart connector, and more particularly to such a lever connector in which the locking lever is held at a lock position by an engagement mechanism.

JP-U-05 090 845 or JP-A-05 090 843 disclose lever connectors of the above-described type.

Referring to Fig. 14 illustrating the lever connector according to JP-U-05 090 845, a connector housing 1 includes a cylindrical bottomed hood 2 into which a housing of a counterpart connector is inserted for interfitting engagement of the connectors. The hood 2 has two shafts 2a projecting from the opposite side walls thereof. A generally U-shaped locking lever 3 includes a base 3a and two arms 3b formed by bending both ends of the base 3a by 90° respectively. The locking lever 3 is first placed astraddle the hood 2 and the shafts 2a are then inserted into bearing holes 3bl formed through the arms 3a, respectively, so that the locking lever 3 is rotatably mounted on the hood 2.

Each arm 3 has a whirlpooling groove 3b2 formed in its inner face. Protrusions formed on the counterpart connector housing are guided into the grooves 3b2 and the locking lever 3 is then rotatively moved so that the counterpart connector housing is further guided along the whirlpooling grooves 3b2 into the hood 2. Each arm 3 further has a radially extending stripe-like projection 3c formed on its outer face. Upon rotative movement of the locking lever 3, the arms 3b are rotatively moved with the bearing holes 3b1 as fulcrums. When having been rotatively moved to a lock position so that the counterpart connector housing has completely enclosed in the hood 2, the projections 3c are substantially parallel to the direction in which the counterpart connector housing is inserted into the hood through its open end.

Further, the hood 2 has two locking arms 2b formed on the opposite side walls thereof respectively. The locking arms 2b cover the respective projections 3c when the locking lever 3 has been rotatively moved such that the projections 3c are parallel to the hood 2. Each locking arm 2b has a claw formed on its inner face being engageable with the projection 3c. Accordingly, the counterpart connector housing is drawn into the hood 2 upon the rotative movement of the locking lever 3, and the projections 3c of the locking lever 3 are engaged with the locking arms 2b respectively when the locking lever 3 has assumed the final or lock position, whereupon the lever 3 is held at the lock position.

In the above-described lever connector, however, an external force such as vibration sometimes causes the locking lever 3 to rotatively move to thereby assume the lock position while the lever connectors are being transported with the counterpart connector housings not accommodated in the hoods, for example. Accordingly, in the subsequent step of interfitting the connectors, the counterpart connector housing needs to be inserted into the hood 2 after the locking lever has been released from the lock position. Consequently, the working efficiency in the connector interfitting step is lowered.

Therefore, an object of the present invention is to provide a lever connector wherein the locking lever can be prevented from being inadvertently held at the lock position.

A solution of this object is achieved by what is claimed in claim 1.

Accordingly, the present invention provides a lever connector having interfitting engagement with a counterpart connector and comprising: a housing on which a locking lever is mounted so as to be displaced between a lock position where the connector housing and a housing of the counterpart connector are in engagement with each other and a release position where the counterpart connector housing is disengaged from the connector housing, so that the connector housing is engaged with the counterpart connector housing when the locking lever is displaced from the release position to the lock position; and an engagement and locking mechanism including a locking or engagement member provided on the connector housing and an engagement or locking member provided on the locking lever, the engagement and locking members being engaged with each other when the locking lever assumes the lock position, thereby locking the locking lever at the lock position. According to the present invention, urging means are provided for shifting said locking lever relative to said connector housing, when said connector housing is not engaged with the counterpart connector housing thereby blocking to reach the interfitting engagement; and a lock control mechanism is provided allowing the engagement and locking mechanism to lock the connector housing and the locking lever when there is engagement with the counterpart connector housing by overcoming the shifting of said locking lever caused by said urging means.

In this construction, the lock control mechanism may disallow the locking lever and the connector housing to be locked when the connector housing is disengaged from the counterpart connector housing. Alternatively, the lock control mechanism may prevent the locking lever from being moved when the connector housing is disengaged from the counterpart connector housing.

Thus, according to the above-described construction, the lock control mechanism either disallows the engagement and locking mechanism to engage the locking lever with the connector housing until the counterpart connector housing and the connector housing are interfitted together or it disallows the locking lever to leave its release position. Accordingly, in both cases the connector housing and the locking lever can be prevented from being inadvertently engaged with each other during transportation before the interfitting engagement with the counterpart connector housing takes place. Consequently, the working efficiency in the step of interfitting engagement of the connectors can be prevented from being lowered.

The invention will be described, merely by way of example, with reference to the accompanying drawings, in which:
Fig. 1 is a perspective view of a first embodiment of a lever connector in accordance with the present invention, together with a counterpart connector mounted on a casing of an electrical equipment;
Fig. 2 is an exploded view of the lever connector;
Fig. 3 is a front view of the lever connector;
Figs. 4A and 4B are partially enlarged plan views of the lever connector;
Figs. 5A. 5B and 5C are sectional views of the lever connector and the counterpart connector;
Fig. 6 is a view similar to Fig. 1, showing a second embodiment of an electrical lever connector in accordance with the present invention;
Fig. 7 is a view similar to Fig. 2 in the second embodiment;
Fig. 8 is a view similar to Fig. 3 in the second embodiment;
Figs. 9A and 9B are partially enlarged front views of a locking lever, showing the engagement and disengagement of stopper faces with respective engagement convexities;
Fig. 10 is a view similar to Fig. 1, showing a third embodiment of an electrical lever connector in accordance with the present invention:
Fig. 11 is a view similar to Fig. 2 in the third embodiment;
Fig. 12 is a view similar to Fig. 3 in the third embodiment;
Figs. 13A and 13B are partially enlarged plan views of a locking lever, showing the engagement and disengagement of a locking lever with the counterpart connector housing; and
Fig. 14 is a perspective view of a prior art lever connector.

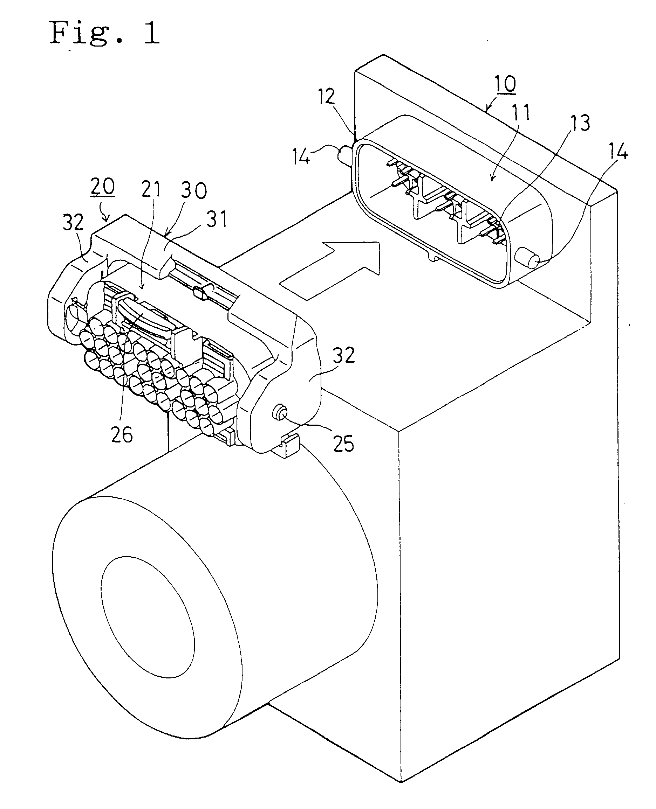

A first embodiment of the present invention will be described with reference to Figs. 1 to 5C. In the first embodiment, a lever connector 20 in accordance with the present invention is detachably mounted to a male connector housing 11 formed integrally on a casing 10 of an electrical equipment, as shown in Fig. 1.

The male connector housing 11 includes a male side hood 12 formed into the shape of a cylindrical partition wall and projecting from one face of the casing 10. A plurality of male terminals or electrode terminals 13 is accommodated in the hood 2 so as to extend toward an open end of the same. A pair of short columnar projections 14 having respective shaft centers collinear each other is formed on opposite outer sides thereof respectively.

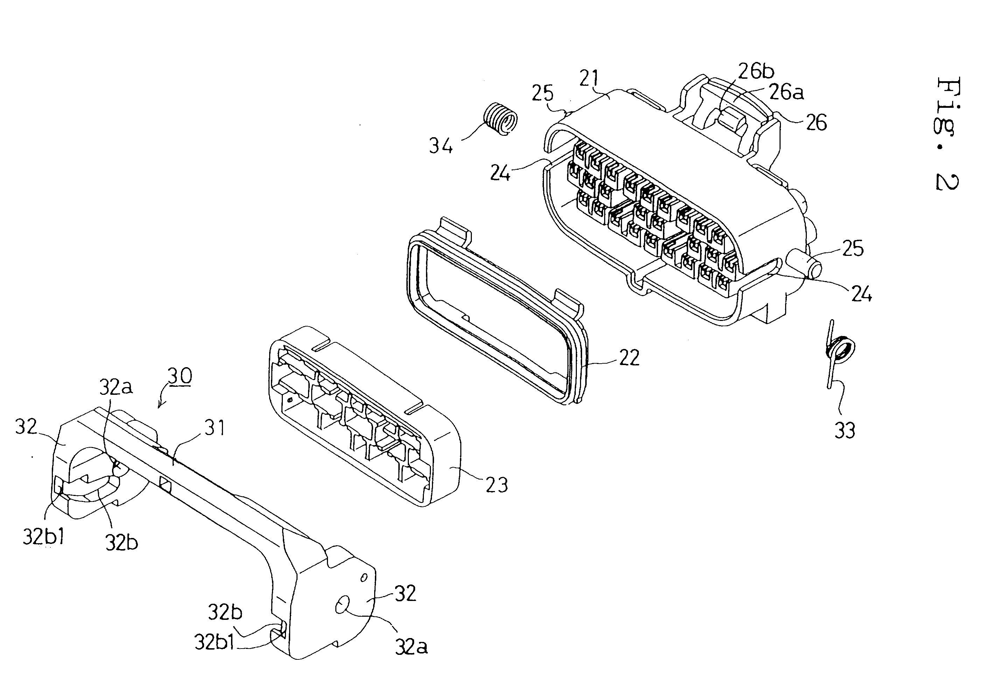

Referring to Fig. 2, the lever connector 20 includes a cylindrical bottomed housing 21 into which the hood 12 is inserted. A plurality of female terminals to be fitted with the respective male terminals 13 for electrical connection is accommodated in the housing 21 so as to be directed toward an open end of the same. A ring-shaped sealing member 22 and a retainer are attached to the open end of the housing 21 in turn, thereby providing double holding for the female terminals.

The housing 21 has in its opposite side walls two notches 24 extending from the open edge thereof toward the opposite side. The projections 14 pass through the notches 24 respectively when the housing 21 is engaged with the male connector housing 11, as will be described later. A pair of projections 25 having respective shaft centers collinear with each other is formed on the opposite side walls of the housing 21 respectively. The projections 25 are located in the vicinity of terminations of the respective notches 24. The housing 21 further has a locking arm 26 extending from the upper edge of the end opposite to the open end thereof, as viewed in Fig. 2. The locking arm 26 includes an upper operating portion 26a on which a finger is put and a locking claw 26b projecting from the operating portion 26a toward the open end of the housing 21. Since the locking arm 26 has elasticity, the locking claw 26b is vertically displaceable slightly.

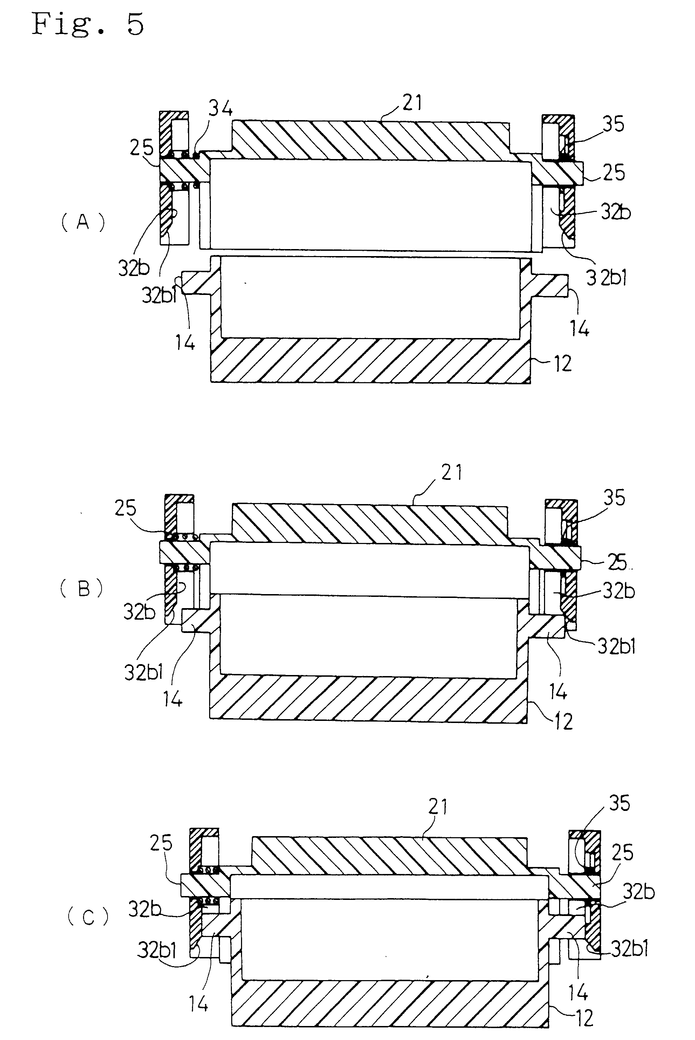

The locking lever 30 includes a base 31 and two arms 32 extending from both ends of the base 31 along the opposite side walls of the housing 21 at a right angle to the base 31 respectively. Each arm 32 has a bearing hole 32a formed through the central portion thereof. The projections 25 of the housing 21 are inserted into the bearing holes 32a respectively as will be described later. Each arm 32 further has in its inner face a whirlpooling drawing groove 32b. Each groove 32b is open to the outer peripheral face of the arm 32 at its one end and has at the open end an inclined face 32b1 extending inwardly from the open end. The distance between the inclined faces 32bl is reduced as they extend inwardly, as shown in Figs. 5A-5C.

The arms 32 of the locking lever 30 are expanded and the projections 25 of the housing 21 are inserted into the respective bearing holes 32a, so that the locking lever 30 is mounted on the housing. 21 so as to straddle it. Since the length between the arms 32 of the locking lever 30 is slightly larger than the width of the housing 21, the locking lever 30 is rotatively movable about the projections 25 and slidable axially along the projections 25.

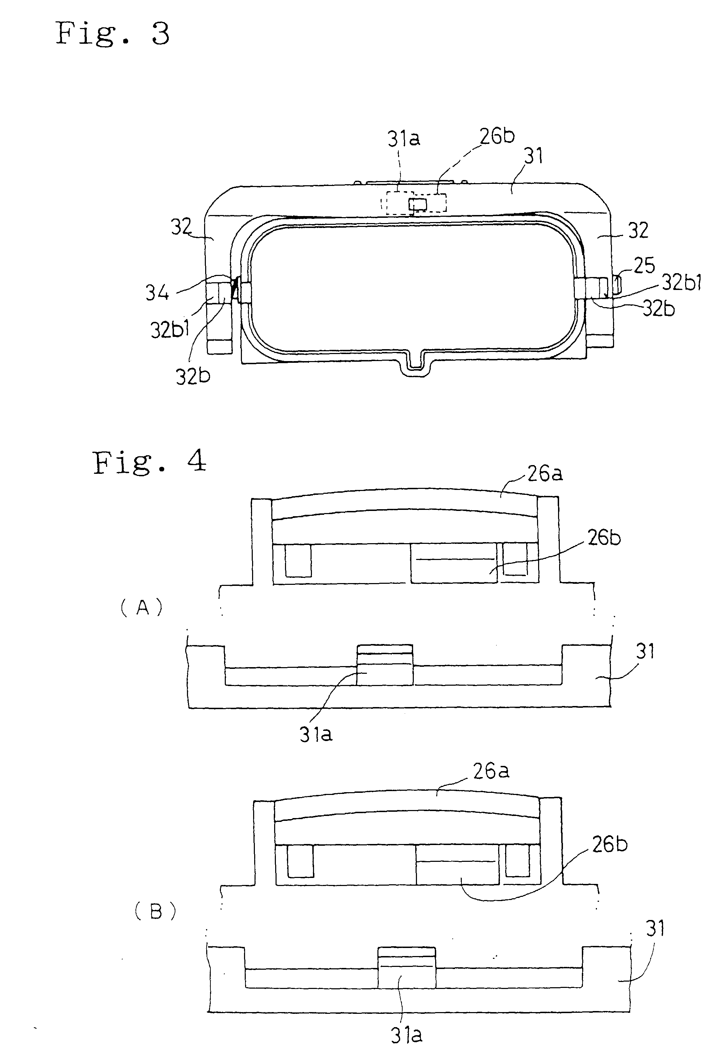

The diameter of each bearing hole 32a is larger at the inner side of the arm 32 than that of the projection 25. A torsion coil spring 33 through which the projection 25 is insertable is provided in one of the bearing holes 32a. A coil spring 34 through which the projection 25 is insertable is provided in the other bearing hole 32a. The torsion coil spring'33 is held at one of two ends thereof on the housing 21 and at the other end thereof on the arm 32 of the locking arm 30, whereupon the locking lever 30 is urged so that the openings of the drawing grooves 32b are directed to the open end of the housing 21. On the other hand, the coil spring 34 is abutted at one of two ends thereof against the outer wall of the housing 21 and at the other end thereof against the inner wall of the arm 32 of the locking lever 30. whereupon the locking lever 30 is urged to the left in parallel to the axis of the projection 25, as viewed in Fig. 3. Consequently, the locking lever 30 is displaceable to the right by a distance corresponding to a resultant gap.

The locking lever 30 has an engagement claw 31a formed on approximately the central portion of its base 31 opposite to the open end of the housing 21. The engagement claw 31a is engageable with the locking claw 26b of the locking arm 26 and comes close to and departs from the locking arm 26 of the housing 21 when the locking lever 30 is rotatively moved in an arc. The engagement claw 31a is moved widthwise when the locking lever 30 is displaced axially of the projections 25. The engagement claw 31a is disallowed to engage the locking claw 26b when the locking lever 30 has been displaced to the leftmost. It is allowed to engage the locking claw 26b when the locking lever 30 has been displaced to the right. The locking lever 30 assumes a release position when the openings of the drawing grooves 32b are directed to the open end of the housing 21 by the torsion coil spring 33. The locking lever 30 assumes a lock position when it is rotatively moved so that the engagement claw 31a is engageable with the locking claw 26b. The engagement claw 31a and the locking arm 26 constitute an engagement and locking mechanism comprising members which are further constituted by the engagement claw 31a and the locking claw 26b.

The operation of the above construction will now be described. The locking lever 30 is urged by the coil spring 34 to the left relative to the housing 21 when the lever connector 20 is separate from the male connector housing 11, as viewed in Fig. 3. In this condition, the engagement claw 31a is disallowed to engage the locking claw 26b, as shown in Fig. 4A. Accordingly, even when an external force produced during transportation of the lever connector 20 causes the locking lever 30 to rotatively move to the lock position against the torsion coil spring 33, the engagement claw 31a does not engage the locking claw 26b. Thereafter, the torsion coil spring 34 returns the engagement claw 31a to the former release position upon disappearance of the external force. Consequently, the locking lever 30 can be prevented from being held at the lock position before the lever connector 20 is fitted with the male connector mounted on the casing 10 of the electrical equipment.

On the other hand, when fitted with the male connector mounted on the casing 10, the lever connector 20 is first placed to face the male connector housing 11, as shown in Fig. 5A. Since the locking lever 30 is urged to the left of the housing 21 on this occasion, the engagement claw 31a and the locking claw 26b are disallowed to engage each other, as shown in Fig. 4A. When the male connector housing 11 is inserted into the housing 21, the projections 14 of the male connector housing 11 are guided into the notches 24 of the housing 21 and then into the drawing grooves 32b formed in the arms 32 located outside the notches 24, respectively. Since the inclined faces 32bl are formed in the open ends of the drawing grooves 32 respectively, the distal end of the right-hand projection 14 collides with the inclined face 32bl of the right-hand arm 32 such that the locking lever 30 is drawn to the right, as shown in Fig. 5B.

The locking lever 30 is rotatively moved to the lock position when both projections 14 have entered the openings of the drawing grooves 32b respectively as shown in Fig. 5C. The projections 14 are then guided along the drawing grooves 32b to the bearing holes 32a, respectively. When the projections 14 are drawn along the respective drawing grooves 32b, the base 31 of the locking lever 30 is operated so that the locking lever 30 is rotatively moved with the bearing holes 32a serving as the fulcrums. Accordingly. since the whirlpooling drawing grooves 32b draw the respective projections 14 by leverage, the connectors can be fitted with each other with a small force.

The locking lever 30 is already displaced to the right before rotated to assume the lock position. In this condition, the engagement claw 31a is engageable with the locking claw 26b as shown in Fig. 4B. Accordingly, when the locking lever 30 assuming the lock position is continuously thrust against the locking arm 26, the engagement claw 31a engages the locking claw 26b so that the locking lever 30 is held at the lock position.

According to the above-described construction, the locking lever 30 is displaced relative to the connector housing 21 when the projections 14 formed on the male connector housing 11 are abutted against the inclined faces 32bl of the drawing grooves 32b of the locking lever 30 respectively. Consequently, the engagement claw 31a composing the engagement and locking mechanism assumes the position where it is engageable with the locking claw 26b also composing the engagement and locking mechanism. Thus, the engagement claw 31a is disallowed to engage the locking claw 26b when the locking lever 30 is rotatively moved in the condition that the connector housing 21 is out of engagement with the male connector housing 11. However, the engagement claw 31a is engaged with the locking claw 26b when the connectors are fitted with each other, so that the locking lever 30 serves as a locking mechanism.

Although the locking lever 30 in the foregoing embodiment is displaced so that the engagement claw 31a is allowed and disallowed to engage the locking claw 26b, the locking claw 26b at the side of the housing 21 may be displaced, instead. For this purpose, a displaceable abutment piece is provided in the innermost interior of the housing 21. The abutment piece has on its one end a claw serving for the above-described locking claw 26b. The male connector housing 11 abuts against the abutment piece when having been fitted into the housing 21, thereby displacing the abutment piece. As the result of displacement of the abutment piece. a locking claw formed on the other end of the abutment piece assumes the position where it is engageable with the engagement claw 31a.

Although the engagement and locking mechanism is provided on the base 31 of the locking lever 30 in the foregoing embodiment, it may be provided on each arm of the locking lever as in the prior art lever connector. Furthermore. although the locking lever 30 is operated so that the counterpart connector is drawn into the connector by the leverage, the locking lever may have a locking mechanism engaging the fitted counterpart connector for preventing the counterpart connector from falling out, instead. Additionally, although the torsion coil spring 33 and the coil spring 34 are used in the above-described lever connector, a single spring may be employed for the functions of both of them.

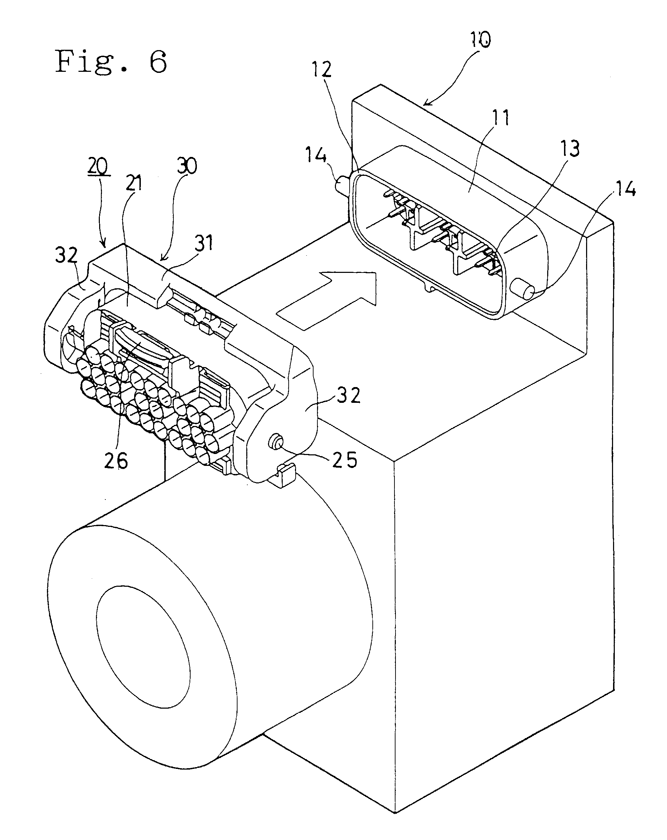

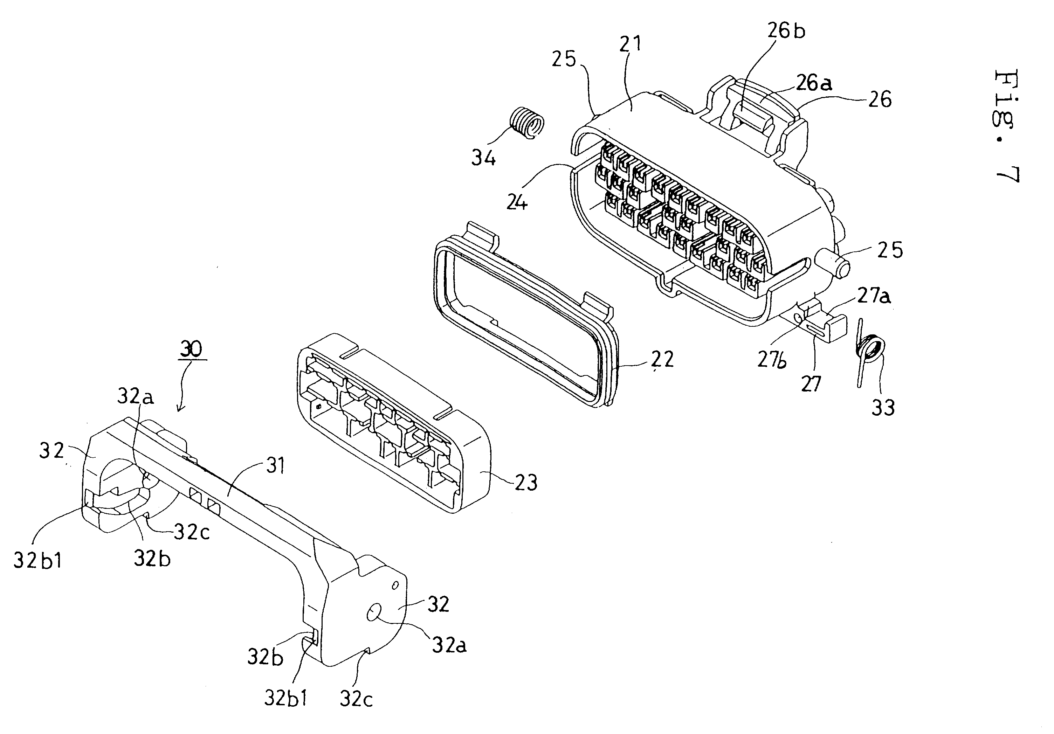

Figs. 6 to 9B illustrate a second embodiment of the present invention. The identical parts are labeled by the same reference numerals as those in the first embodiment.

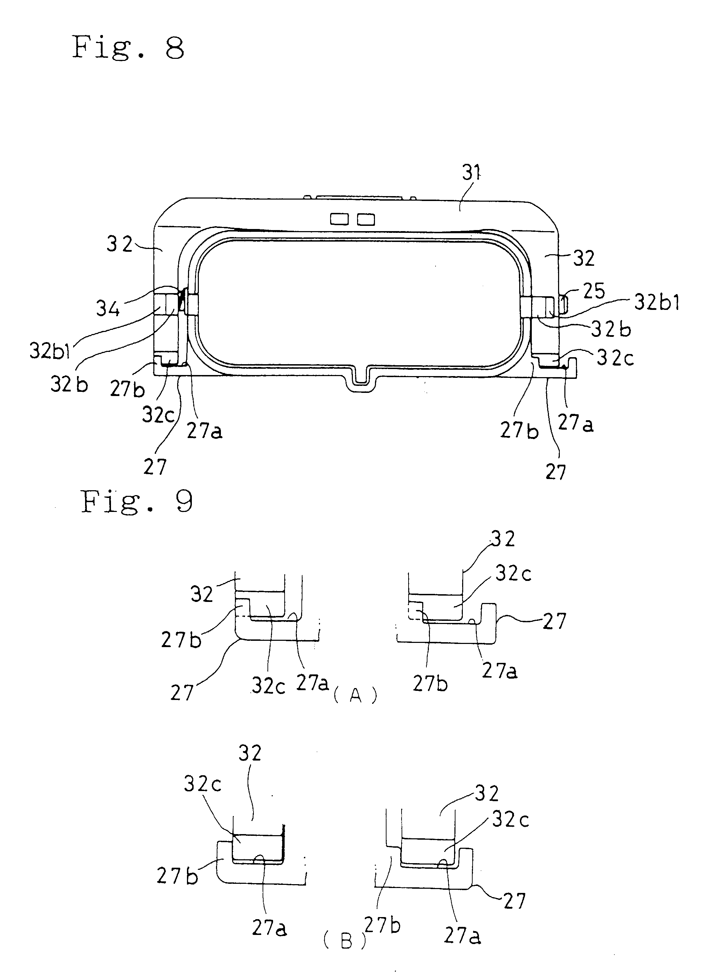

The female connector housing 21 has two protrusions 27 horizontally projecting from the central lower edges of the opposite side walls thereof. Each protrusion 27 has in its outer face a groove 27a whose width is slightly larger than the thickness of each arm 32 of the locking lever 30. After the locking lever 30 is released from prevention of its rotative movement at the initial position, the arms 32 of the locking lever 30 are allowed to pass through the grooves 27a respectively so that the rotative movement of the locking lever 30 is allowed. The arms 32 of the locking lever 30 have respective stopper faces 32c formed on the lower ends thereof, as shown in Figs. 8, 9A and 9B. The left-hand groove 27a has an outer projecting edge 27b while the right-hand groove 27a has an inner projecting edge 27b, as viewed in Figs. 8, 9A and 9B. When these projecting edges 27b are engaged with the stopper faces 32c respectively, the rotative movement of the locking lever 30 is prevented and held at the initial position.

The operation of the above construction will now be described. The locking lever 30 is urged to the left by the coil spring 34 when the female connector is separate from the male connector. as viewed in Figs. 8. 9A and 9B. Accordingly, the stopper faces 32c of the locking lever 30 are in engagement with the projecting edges 27b respectively, as shown in Fig. 9A. The locking lever 30 is held at the position where its rotative movement is prevented, so that the locking lever 30 can be prevented from being inadvertently engaged with the locking arm 26 when the female connector is separate from the male connector.

On the other hand, the locking lever 30 is gradually displaced to the right against the coil spring 34 in the interfitting engagement of the housings 11 and 21, as shown in Fig. 9B. Accordingly, the stopper faces 32c of the locking lever 30 are disengaged from the respective projecting edges 27b. and the lower ends of the arms 32 are coordinated with the respective grooves 27a. Since the locking lever 30 is allowed to be rotatively moved in this condition, it can be rotatively moved thereafter. Subsequently. both connector housings 11 and 21 are held in the state of interfitting engagement when the engagement claw 31a of the locking lever 30 is engaged with the locking claw 26b of the female connector housing 21.

According to the above-described construction, the locking lever 30 can be prevented from inadvertently assuming the lock position when the female connector is separated from the male connector. Thus, the locking lever 30 is held at the normal initial position at the time of interfitting engagement of both connectors 11 and 21. Accordingly, the interfitting engagement of both connectors 11 and 21 can smoothly be performed. Furthermore, the locking lever 30 is automatically released from prevention of its rotative movement in the process that the projections 14 are thrust in, guided along the respective inclined faces 32b. Consequently. further smoothing of the interfitting work can be anticipated.

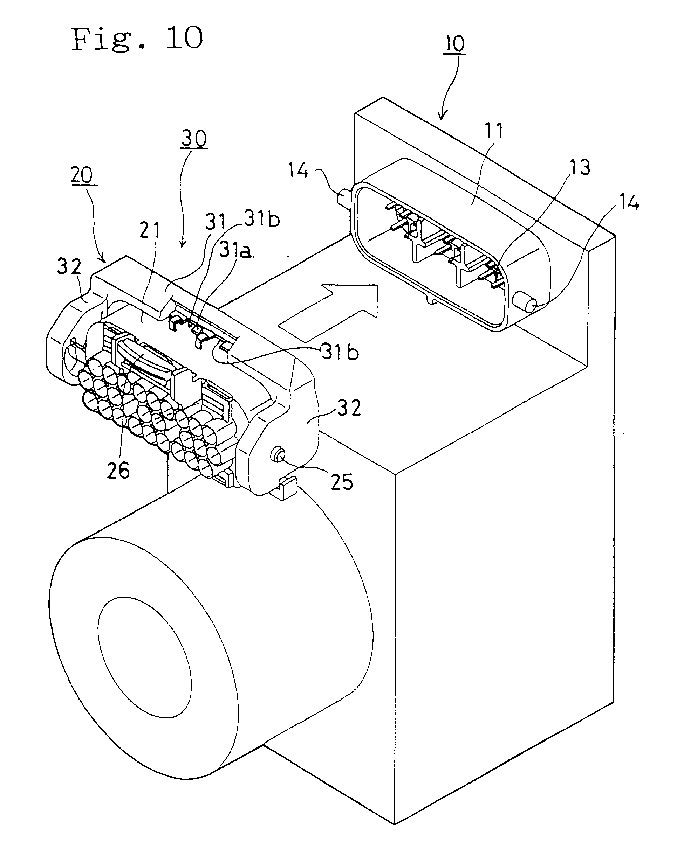

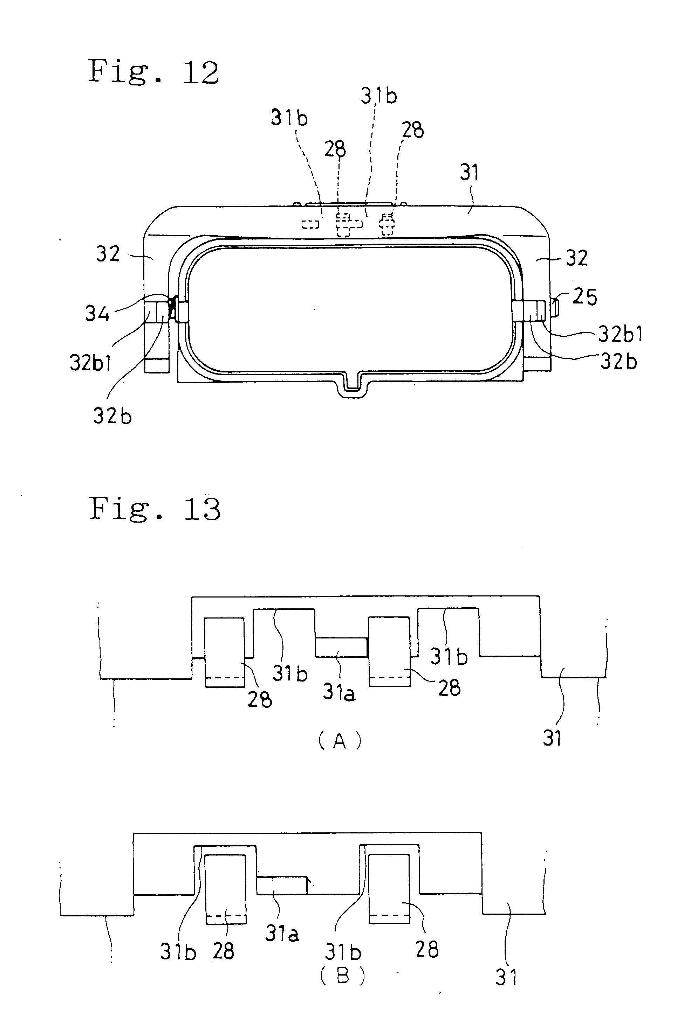

Figs. 10 to 13 illustrate a third embodiment of the present invention. In the above-described second embodiment the rotative movement of the locking lever 30 is prevented by the protrusions 27 formed on the female connector housing 21 and the arms 32 of the locking lever 30. In the third embodiment, the rotative movement of the locking lever 30 is controlled by two notches 31b formed in the base 31 connecting between the arms 32 and two inverted L-shaped engagement protrusions 28 formed on the upper face of the female connector housing 21.

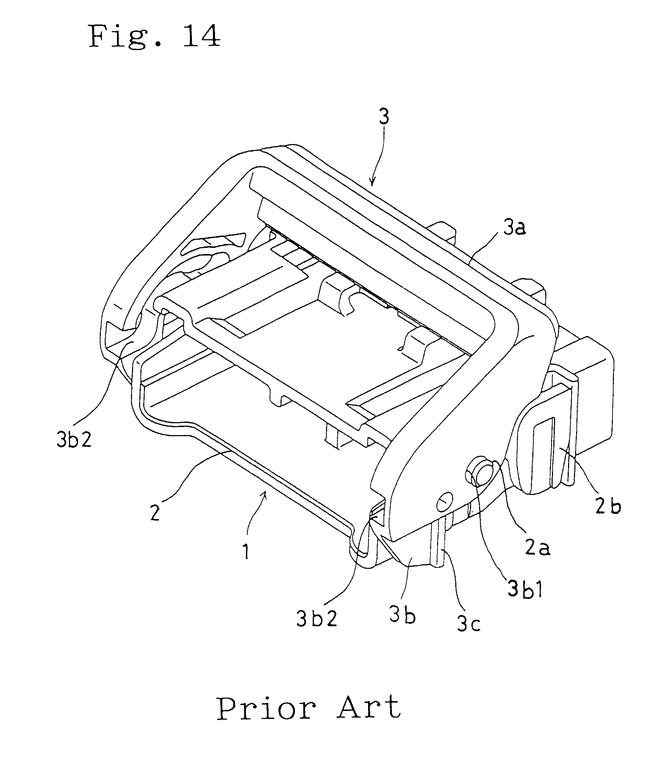

The engagement claw 31a engaged with the locking claw 26b of the locking arm 26 is formed on the central portion of the base 31 of the locking lever 30, as described above. Both sides of the engagement claw 31a are cut out so that the notches 31b are formed, as best shown in Figs. 13A and 13B.

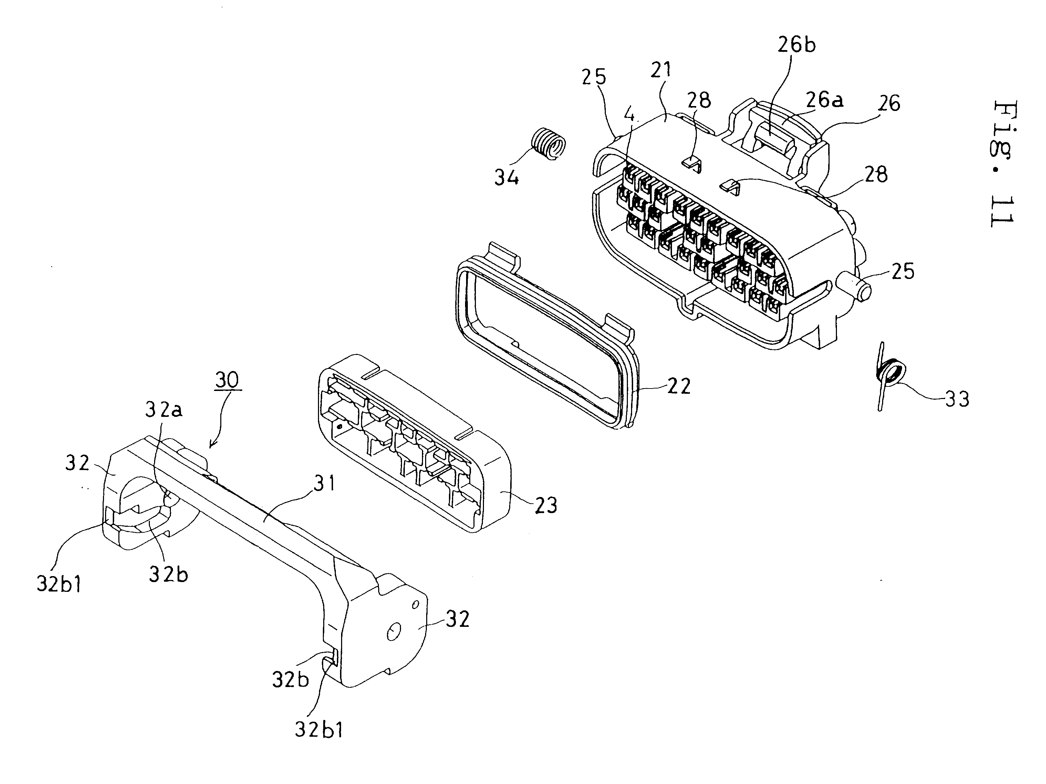

The above-mentioned inverter L-shaped engagement protrusions 28 are formed on the upper face of the female connector housing 21 as shown in Fig. 11. Each engagement protrusion 28 has in its upper end a bent portion whose width is set so as to be inserted into the notch 31b, as shown in Fig. 13. Thus, the locking lever 30 can be displaced by a predetermined stroke axially of the projections 25. With the displacement of the locking lever 30, the relative positions of the engagement protrusions 28 and the respective notches 31b are varied as shown in Figs. 13A and 13B.

The base 31 of the locking lever 30 is upwardly moved from over the upper face of the female connector housing 21 when the locking lever is rotatively moved for the interfitting engagement of the male and female connector housings 11 nd 21. Accordingly. the locking lever 30 can be rotatively moved when the upper ends of the engagement protrusions 28 face the notches 31b respectively as shown in Fig. 13B. However. when opposed to unnotched portions of the base 31, the upper ends of the engagement protrusions 28 are engaged with the unnotched portions, so that the locking lever 30 cannot be rotatively moved, as shown in Fig. 13A.

In the third embodiment, before the interfitting engagement of the connectors, the upper ends of the engagement protrusions 28 are opposed to the unnotched portions of the base 31 by the action of the coil spring 34, so that inadvertent rotative movement of the locking lever 30 can be prevented. In the interfitting engagement of the connectors, the locking lever 30 is displaced in the same manner as in the foregoing embodiments so that the upper ends of the engagement protrusions 28 face the respective notches 31b, whereupon the locking lever 30 can be rotatively moved.

The arms 32 of the locking lever 30 extend from both ends of the base 31 at a right angle to the same. To maintain each arm 32 at an angle of 90° relative to the base 31 is difficult, and each arm 32 tends to curve inwardly. In the above-described second embodiment the stopper faces 32c of the arms 32 are abutted against and departed from the projecting edges 27b of the protrusions 27. To ensure this function of the stopper faces 32c, a high level of angular accuracy relative to the base 31 is required of the arms 32. In the third embodiment, however, the base 31 of the locking lever 30 is held via the arms 32 on the female connector housing 21. Accordingly, there is little influence of an angular error between the base 31 and each arm 32'. Consequently. the engagement protrusions 28 can reliably be engaged with and disengaged from the respective notches 31b even when the accuracy in the forming of the arms 32 is not at a high level.

Although shifting means is provided for automatically releasing the locking lever 30 from the locked state in the third embodiment, the lever may be manually displaced. instead. Furthermore. the torsion coil spring 33 urges the locking lever 30 in a direction to permit it to return in the third embodiment. However, since inadvertent rotative movement of the locking lever 30 is reliably prevented before the interfitting engagement of the connectors. the torsion coil spring 33 may be eliminated. Additionally. although the locking arm 26 is provided on the female connector housing 21 in the third embodiment, the locking lever 30 may be engaged with the male connector housing so that the connectors are held in the state of interfitting engagement. Furthermore, the locking lever 30 may be mounted on the male connector housing 11 and the projections 14 may be formed on the female connector housing 21.

## Claims

1. A lever connector having interfitting engagement with a counterpart connector and comprising:
a housing (21) on which a locking lever (30) is mounted so as to be displaced between a lock position where the connector housing (21) and a housing (11) of the counterpart connector are in engagement with each other and a release position where the counterpart connector housing (11) is disengaged from the connector housing (21), so that the connector housing (21) is engaged with the counterpart connector housing (11) when the locking lever (30) is displaced from the release position to the lock position; and
an engagement and locking mechanism (31a, 26) including a locking or engagement member (31a) provided on the connector housing (21) and an engagement or locking member (26b) provided on the locking lever (30), the engagement and locking members (31a, 26b) being engaged with each other when the locking lever (30) assumes the lock position, thereby locking the locking lever (30) at the lock position,
characterized by
urging means (34) for shifting said locking lever (30) relative to said connector housing (21), when said connector housing (21) is not engaged with the counterpart connector housing (11) thereby blocking to reach the interfitting engagement ; and
a lock control mechanism (14, 32b1) allowing the engagement and locking mechanism (31a, 26) to lock the connector housing (21) and the locking lever (30) when there is engagement with the counterpart connector housing (11) by overcoming the shifting of said locking lever (30) caused by said urging means (34).

2. The lever connector according to claim 1, characterized in that the locking or engagement members (31a, 26b) of the engagement and locking mechanism (31a, 26) are displaced between first relative positions where the locking or engagement members (31a, 26b) are allowed to be engaged with each other and second relative positions where the locking or engagement members (31a, 26b) are disallowed to be engaged with each other and that the engagement and locking mechanism (31a, 26) includes an abutting mechanism (32b1) abutting against the counterpart connector housing (11) to thereby displace the locking or engagement members (31a, 26b) to the first positions upon the interfitting engagement of the connector housing (21) and the counterpart connector housing (11).

3. The lever connector according to claim 1 or 2, characterized in that the locking lever (30) is mounted on shafts (25) of the connector housing (21) so as to be rotatably movable and displaceable axially of the connector housing (21), that the locking or engagement members (31a, 26b) of the engagement and locking mechanism (31a, 26) assume the first and second relative positions in accordance with the positions the locking lever (30) assumes when the same is axially displaced, and that the abutting mechanism (32b1) has an inclined face (32b1) axially moving the locking lever (30) so that the locking or engagement members (31a, 26b) of the engagement and locking mechanism (31a, 26) assume the first relative positions when the abutting mechanism (32b1) abuts against the counterpart connector housing (11).

4. The lever connector according to claim 3, characterized in that the counterpart connector housing (11) has a projection (14) formed thereon, wherein the locking lever (30) has a whirlpooling groove (32b) guiding the projection (14) of the counterpart connector housing (11) when the locking lever (30) is rotatively moved, so that the counterpart connector housing (11) can be drawn into the connector housing (21), and that the inclined face (32b1) of the abutting mechanism (32b1) defines an open end of the whirlpooling groove (32b), through which open end the projection (14) of the counterpart connector housing (11) is guided into the whirlpooling groove (32b).

5. The lever connector according to claim 2, characterized in that the locking or engagement member (31a or 26b) of the connector housing (21) is displaceable between the first relative position where the same is engageable with the engagement or locking member (26b or 31a) of the locking lever (30) and the second relative position where the same is unengageable with the engagement or locking member (26a or 31a) of the locking lever (30), and that the abutting mechanism (32b1) abuts against the counterpart connector housing (11) so that the locking or engagement member (31a or 26b) of the connector housing (21) is displaced tb the first relative position.

6. The lever connector according to claim 1, further characterized by a stopper (32c) locking the locking lever (30) and the connector housing (21) at the release position so that both are undisplaceable and by a stopper release mechanism releasing the stopper (32c) from the locking state when abutting against the counterpart connector housing (11).

7. The lever connector according to claim 6, further characterized by a spring means (34) urging the stopper (32c) toward the side where the locking lever (30) is locked by the same.

8. The lever connector according to claim 6, characterized in that the stopper releasing mechanism comprises inclined faces formed on the counterpart connector housing (21) and the locking lever (30) respectively, the inclined faces abutting against each other to thereby displace the stopper in such a direction that the same releases the locking lever (30) and the connector housing (21) from the locked state.

9. The lever connector according to claim 6, characterized in that the locking lever (30) is generally formed into a U-shape and is pivotally mounted on the connector housing (21) so that the connector housing (21) is placed between both bent ends of the locking lever (30) and that the stopper is provided on a base (31) of the U-shaped locking lever (30), which base (31) connects between the bent ends thereof.

## Patentansprüche

1. Ein Verbinder mit Hebel für einen Paßeingriff mit einem Gegenverbinder und mit:
einem Gehäuse (21), an welchem ein Verriegelungshebel (30) so angeordnet ist, daß er zwischen einer Verriegelungsposition, wo das Verbindergehäuse (21) und ein Gehäuse (11) des Gegenverbinders in Eingriff miteinander sind und einer Freigabeposition bewegbar ist, wo das Gehäuse (11) des Gegenverbinders außer Eingriff mit dem Verbindergehäuse (21) ist, so daß das Verbindergehäuse (21) mit dem Gehäuse (11) des Gegenverbinders in Eingriff ist, wenn der Verriegelungshebel (30) aus der Freigabeposition in die Verriegelungsposition bewegt wird; und
einem Eingriffs- und Verriegelungsmechanismus (31a, 26), mit einem Verriegelungs- oder Eingriffsteil (31a), welches an dem Verbindergehäuse (21) angeordnet ist und einem Eingriffs- oder Verriegelungsteil (26b), welches an dem Verriegelungshebel (30) angeordnet ist, wobei die Eingriffs- und Verriegelungsteile (31a, 26b) miteinander in Eingriff sind, wenn der Verriegelungshebel (30) die Verriegelungsposition einnimmt, wodurch der Verriegelungshebel (30) in der Verriegelungsposition verriegelt ist,
gekennzeichnet durch:
Vorspannmittel (34) zum Verschieben des Verriegelungshebels (30) relativ zu dem Verbindergehäuse (21), wenn das Verbindergehäuse (21) nicht in Eingriff mit dem Gehäuse (11) des Gegenverbinders ist, wodurch das Erreichen des Paßeingriffes blockiert ist; und
einen Verriegelungssteuermechanismus (14, 32bl), der es dem Eingriffs- und Verriegelungsmechanismus (31a, 26) erlaubt, das Verbindergehäuse (21) und den Verriegelungshebel (30) zu verriegeln, wenn ein Eingriff mit dem Gehäuse (11) des Gegenverbinders vorliegt, in dem die Verschiebung des Verriegelungshebels (30) aufgrund der Vorspannmittel (34) überwunden wird.

2. Der Verbinder mit Hebel nach Anspruch 1, dadurch gekennzeichnet, daß die Verriegelungs- oder Eingriffsteile (31a, 26b) des Eingriffs- und Verriegelungsmechanismus (31a, 26) zwischen ersten Relativlagen, wo es den Verriegelungs- oder Eingriffsteilen (31a, 26b) erlaubt ist, miteinander in Eingriff zu sein und zweiten Relativlagen versetzt werden, wo es den Verriegelungs- oder Eingriffsteilen (31a, 26b) nicht erlaubt ist, miteinander in Eingriff zu sein und daß der Eingriffs- und Verriegelungsmechanismus (31a, 26) einen Anschlagmechanismus (32b1) aufweist, der an dem Gehäuse (11) des Gegenverbinders anschlägt, um hierdurch die Verriegelungs- oder Eingriffsteile (31a, 26b) bei Paßeingriff des Verbindergehäuses (21) und des Gehäuses (11) des Gegenverbinders in die erste Position zu bewegen.

3. Der Verbinder mit Hebel nach Anspruch 1 oder 2, dadurch gekennzeichnet, daß der Verriegelungshebel (30) an Wellen (25) des Verbindergehäuses (21) so angeordnet ist, daß er drehbeweglich und axial zu dem Verbindergehäuse (21) versetzbar ist, daß die Verriegelungs- oder Eingriffsteile (31a, 26b) des Eingriffs- und Verriegelungsmechanismus (31a, 26) die ersten und zweiten Relativpositionen abhängig von den Lagen einnehmen, welche der Verriegelungshebel (30) einnimmt, wenn er axial versetzt wird, und daß der Anschlagmechanismus (32b1) eine abgeschrägte Fläche (32b1) hat, welche den Verriegelungshebel (30) axial bewegt, so daß die Verriegelungs- oder Eingriffsteile (31a, 26b) des Eingriffs- und Verriegelungsmechanismus (31a, 26) die ersten Relativpositionen einnehmen, wenn der Anschlagmechanismus (32bl) an dem Gehäuse (11) des Gegenverbinders anschlägt.

4. Der Verbinder mit Hebel nach Anspruch 3, dadurch gekennzeichnet, daß das Gehäuse (11) des Gegenverbinders einen Vorsprung (14) hieran aufweist, wobei der Verriegelungshebel (30) eine Spiralbahn (32b) hat, welche den Vorsprung (14) des Gehäuses (11) des Gegenverbinders führt, wenn der Verriegelungshebel (30) drehend bewegt wird, so daß das Gehäuse (11) des Gegenverbinders in das Verbindergehäuse (21) gezogen werden kann und daß die abgeschrägte Oberfläche (32b1) des Anschlagmechanismus (32b1) ein offenenes Ende der Spiralbahn (32b) definiert, wobei durch dieses offene Ende der Vorsprung (14) des Gehäuses (11) des Gegenverbinders in die Spiralbahn (32b) geführt wird.

5. Der Verbinder mit Hebel nach Anspruch 2, dadurch gekennzeichnet, daß das Verriegelungs- oder Eingriffsteil (31a oder 26b) des Verbindergehäuses (21) zwischen der ersten Relativposition, wo dieses in Eingriff mit dem Eingriffs- oder Verriegelungsteil (26b oder 31a) des Verriegelungshebels (30) bringbar ist und der zweiten Relativposition versetzbar ist, wo dieses mit dem Eingriffs- oder Verriegelungsteil (26a oder 31a) des Verriegelungshebels (30) nicht in Eingriff bringbar ist und daß der Anschlagmechanismus (32b1) an dem Gehäuse des Gegenverbinders anschlägt, so daß das Verriegelungs- oder Eingriffsteil (31a oder 26b) des Verbindergehäuses (21) in die erste Relativposition versetzt wird.

6. Der Verbinder mit Hebel nach Anspruch 1, weiterhin gekennzeichnet durch einen Anschlag (32c), der den Verriegelungshebel (30) und das Verbindergehäuse (21) in der Freigabeposition verriegelt, so daß beide nicht versetzbar sind und durch einen Anschlagfreigabemechanismus, der den Anschlag (32c) aus dem Verriegelungszustand freigibt, wenn er an dem Gehäuse (11) des Gegenverbinders anschlägt.

7. Der Verbinder mit Hebel nach Anspruch 6, weiterhin gekennzeichnet durch eine Federvorrichtung (34), welche den Anschlag (32c) auf die Seite vorspannt, wo der Verriegelungshebel (30) durch diesen verriegelt wird.

8. Der Verbinder mit Hebel nach Anspruch 6, dadurch gekennzeichnet, daß der Anschlagfreigabemechanismus abgeschrägte Oberflächen aufweist, die an dem Gehäuse (21) des Gegenverbinders beziehungsweise dem Verriegelungshebel (30) ausgebildet sind, wobei die abgeschrägten Oberflächen aneinander anstoßen, um hierdurch den Anschlag in eine derartige Richtung zu versetzen, daß dieser den Verriegelungshebel (30) und das Verbindergehäuse (21) aus dem verriegelten Zustand freigibt.

9. Der Verbinder mit Hebel nach Anspruch 6, dadurch gekennzeichnet, daß der Verriegelungshebel (30) im wesentlichen U-förmig ausgebildet ist und an dem Verbindergehäuse (21) so angeordnet ist, daß das Verbindergehäuse (21) zwischen den beiden abgebogenen Enden des Verriegelungshebels (30) liegt und daß der Anschlag an einer Basis (31) des Uförmigen Verriegelungshebels (30) angeordnet ist, wobei diese Basis (31) die beiden abgebogenen Enden hiervon verbindet.

## Revendications

1. Un connecteur à levier ayant un engagement emboîtant avec un connecteur de contre-partie et comprenant:
un boîtier (21) sur lequel un levier de verrouillage (30) est monté pour être déplacé entre une position de verrouillage où le boîtier de connecteur (21) et un boîtier (11) du connecteur de contre-partie sont en engagement l'un avec l'autre et une position de dégagement où le boîtier du connecteur de contre-partie (11) est dégagé du boîtier de connecteur (21) de manière que le boîtier de connecteur (21) est engagé avec le boîtier de connecteur de contre-partie (11) quand le levier de verrouillage (30) est déplacé de la position de dégagement à la position de verrouillage; et
un mécanisme de verrouillage et d'engagement (31a, 26) comprenant un membre d'engagement ou de verrouillage (31a) prévu sur le boîtier de connecteur (21) et un membre de verrouillage ou d'engagement (26b) prévu sur le levier de verrouillage (30), les membres de verrouillage et d'engagement (31a, 26b) étant engagés entre eux quand le levier de verrouillage (30) assume la position de verrouillage pour verrouiller ainsi le levier de verrouillage (30) à la position de verrouillage,
caractérisé par
un moyen de poussée (34) pour déplacer ledit levier de verrouillage (30) par rapport audit boîtier de connecteur (21) quand ledit boîtier de connecteur (21) n'est pas engagé avec le boîtier du connecteur de contre-partie (11) pour bloquer ainsi d'atteindre l'engagement emboîtant; et
un mécanisme de contrôle de verrouillage (14, 32b1) permettant au mécanisme de verrouillage et d'engagement (31a, 26) de verrouiller le boîtier de connecteur (21) et le levier de verrouillage (30) quand il y a engagement avec le boîtier du connecteur de contre-partie (11) en surmontant le déplacement dudit levier de verrouillage (30) causé par ledit moyen de poussée (34).

2. Le connecteur à levier selon la revendication 1, caractérisé en ce que les membres d'engagement ou de verrouillage (31a, 26b) du mécanisme de verrouillage et d'engagement (31a, 26) sont déplacés entre des premières positions relatives où les membres d'engagement ou de verrouillage (31a, 26b) sont admis d'être engagés entre eux et des secondes positions relatives où les membres d'engagement ou de verrouillage (31a, 26b) ne sont pas admis d'être engagés entre eux et que le mécanisme de verrouillage et d'engagement (31a, 26) comprend un mécanisme d'aboutement (32b1) aboutant contre le boîtier du connecteur de contre-partie (11) pour déplacer ainsi les membres d'engagement ou de verrouillage (31a, 26b) aux premières positions en cas d'engagement emboîtant du boîtier de connecteur (21) et du boîtier de connecteur de contre-partie (11).

3. Le connecteur à levier selon la revendication 1 ou 2, caractérisé en ce que le levier de verrouillage (30) est monté sur des arbres (25) du boîtier de connecteur (21) pour être mobile autour d'un axe et pour pouvoir être déplacé axialement du boîtier de connecteur (21), que les membres d'engagement ou de verrouillage (31a, 26b) du mécanisme de verrouillage et d'engagement (31a, 26) assument les premières et secondes positions relatives selon les positions que le levier de verrouillage (30) assume quand celui-là est axialement déplacé, et que le mécanisme d'aboutement (32b1) a une face inclinée (32b1) déplaçant axialement le levier de verrouillage (30) de manière que les membres d'engagement ou de verrouillage (31a, 26b) du mécanisme de verrouillage et d'engagement (31a, 26) assument les premières positions relatives quand le mécanisme d'aboutement (32b1) aboute contre le boîtier du connecteur de contre-partie (11).

4. Le connecteur à levier selon la revendication 3, caractérisé en ce que le boîtier du connecteur de contre-partie (11) a une saillie (14) formée là-dessus, dans lequel le levier de verrouillage (30) a une rainure tourbillonnaire (32b) guidant la saillie (14) du boîtier du connecteur de contre-partie (11) quand le levier de verrouillage (30) est déplacé d'une manière rotative de manière que le boîtier du connecteur de contre-partie (11) peut être tiré dans le boîtier de connecteur (21), et que la face inclinée (32b1) du mécanisme d'aboutement (32b1) définit une extrémité ouverte de la rainure tourbillonnaire (32b) à travers laquelle extrémité ouverte la saillie (14) du boîtier du connecteur de contre-partie (11) est guidée dans la rainure tourbillonnaire (32b).

5. Le connecteur à levier selon la revendication 2, caractérisé en ce que le membre d'engagement ou de verrouillage (31a ou 26b) du boîtier de connecteur (21) peut être déplacé entre la première position relative où celui-là peut être engagé avec le membre de verrouillage ou d'engagement (26b ou 31a) du levier de verrouillage (30) et la seconde position relative où celui-là ne peut pas être engagé avec le membre de verrouillage ou d'engagement (26a ou 31a) du levier de verrouillage (30), et que le mécanisme d'aboutement (32b1) aboute contre le boîtier du connecteur de contre-partie (11) de manière que le membre d'engagement ou de verrouillage (31a ou 26b) du boîtier de connecteur (21) est déplacé à la première position relative.

6. Le connecteur à levier selon la revendication 1, caractérisé de plus par un stoppeur (32c) verrouillant le levier de verrouillage (30) et le boîtier de connecteur (21) à une position de dégagement de manière que les deux ne peuvent pas être déplacés et par un mécanisme de dégagement de stoppeur dégageant le stoppeur (32c) de l'état verrouillant quand il aboute contre le boîtier du connecteur de contre-partie (11).

7. Le connecteur à levier selon la revendication 6, caractérisé de plus par un moyen de ressort (34) poussant le stoppeur (32c) vers le côté où le levier de verrouillage (30) est verrouillé par celui-là.

8. Le connecteur à levier selon la revendication 6, caractérisé en ce que le mécanisme de dégagement de stoppeur comprend des faces inclinées formées sur le boîtier du connecteur de contre-partie (21) et le levier de verrouillage (30) respectivement, les faces inclinées aboutant les unes contre les autres pour déplacer ainsi le stoppeur dans une telle direction que celui-là dégage le levier de verrouillage (30) et le boîtier de connecteur de l'état verrouillé.

9. Le connecteur à levier selon la revendication 6, caractérisé en ce que le levier de verrouillage (30) est généralement formé dans une forme de U et est monté d'une manière pivotante sur le boîtier de connecteur (21) de manière que le boîtier de connecteur (21) est placé entre les deux extrémités courbées du levier de verrouillage (30) et que le stoppeur est prévu sur une base (31) du levier de verrouillage en forme de U (30), laquelle base (31) relie les extrémités courbées de celui-ci.
